# EUROPÄISCHE PATENTANMELDUNG

(11) **EP 4 230 044 A1**
(43) Veröffentlichungstag der Anmeldung: **23.08.2023**
(21) Anmeldenummer: 22157452.8
(22) Anmeldetag: 18.02.2022
(51) Int. Cl.: A21B 5/02, A21D 13/33, B65D 65/46, A21D 13/45

(54) **HERSTELLUNGSANLAGE UND VERFAHREN ZUR BILDUNG EINES ESSBAREN DECKELS**

(71) Anmelder: Bühler Food Equipment GmbH, 2100 Leobendorf (AT)
(72) Erfinder: Buczolits, Peter, 2000 Stockerau (AT); Osmic, Fadmar, 2525 Schonau an der Triesting (AT); Weidner, Timo, 2100 Leobendorf (AT); Greil, Johannes, 2100 Leobendorf (AT); Bozic, Jovica, 2100 Leobendorf (AT); Haimer, Emmerich, 2100 Leobendorf (AT); Müllner, Michael, 2100 Leobendorf (AT); Lutz, Sandra, 2100 Leobendorf (AT); Clemenz, Andreas, 2100 Leobendorf (AT); Sikora, Andreas, 2100 Leobendorf (AT); Lindner, Michael, 1200 Wien (AT)
(74) Vertreter: Puchberger & Partner Patentanwälte

(57) **Zusammenfassung**

Verfahren und Herstellungsanlage zur Bildung eines Deckels (1) für ein Behältnis (2),
- wobei der Deckel (1) einen Steckabschnitt (3) zur Verbindung mit dem Behältnis (2) aufweist,
- wobei der Steckabschnitt (3) eine Soll-Abmessung (4) aufweist, die an die Form und Größe eines bestimmten Behältnisses (2) angepasst ist,
- wobei die Herstellungsanlage eine Backvorrichtung (10) mit mehreren Backformen (5) umfasst,
- wobei die Backformen (5) der Form des zu bildenden Deckels (1) angepasst sind und jeweils einen Formabschnitt (7) zur Bildung des Steckabschnitts (3) eines Deckelrohlings (6) aufweisen,
- wobei der Formabschnitt (7) derart dimensioniert ist, dass der Steckabschnitt (3) des Deckelrohlings (6) eine Roh-Abmessung (8) aufweist, die kleiner ist als die Soll-Abmessung (4),
- und wobei die Herstellungsanlage eine Konditioniervorrichtung (9) umfasst, die die Abmessung des Steckabschnitts (3) des Deckelrohlings (6) durch Erhöhen der Feuchtigkeit des Deckelrohlings (6) von der Roh-Abmessung (8) auf die Soll-Abmessung (4) vergrößert.

## Beschreibung

Die Erfindung betrifft ein Verfahren, eine Herstellungsanlage und einen Deckel gemäß den Merkmalen der unabhängigen Patentansprüche.

Behältnisse wie Trinkgefäße oder Lebensmittelgefäße, die beispielsweise aus Pappe oder Karton gefertigt sind, werden meist mit einem Kunststoffdeckel verschlossen.

Während es bekannt ist, die Behältnisse aus kompostierbaren Materialien herzustellen, werden Deckel aus Sicherheits- und Hygienegründen dennoch oft aus Kunststoff gefertigt. Einerseits muss der Deckel ausreichend fest mit dem Becher verbunden sein, um beispielsweise ein überraschendes Austreten eines Heißgetränks vermeiden zu können. Andererseits sollte der Deckel über eine ausreichende Dauer flüssigkeitsdicht bleiben, um einen ungewollten Austritt des Getränks zu vermeiden.

Kompostierbare Materialien können aus ökologischer Sicht nur dann ihre Vorteile entfalten, wenn sie auch wirklich kompostiert werden. Sobald kompostierbares Material mit anderem Abfall gemischt wird, ist eine nachträgliche Sortierung und Trennung oft nicht mehr wirtschaftlich.

Es ist vorteilhaft, einen Deckel für ein Behältnis zu schaffen, der aus ökologischer Sicht Verbesserungen mit sich bringt. Ökologische Verbesserungen können beispielsweise dadurch erzielt werden, dass der Deckel effizient und insbesondere energieeffizient hergestellt werden kann. Ökologische Verbesserungen können auch dadurch bewirkt werden, dass der Deckel ausschließlich aus kompostierbaren Naturstoffen hergestellt wird. Zusätzlich kann eine ökologische Verbesserung bei einem Deckel auch dadurch erfolgen, dass Abfall gänzlich vermieden wird, da der Deckel essbar und insbesondere genießbar ist und verzehrt werden kann.

Nun ist es bekannt, Deckel für Behältnisse durch einen Backprozess herzustellen, bei der ein formbarer Teig zu einem formstabilen Körper gebacken wird.

Überraschenderweise wurde festgestellt, dass derartige gebackene Deckel in der Praxis oft keine ausreichende Passgenauigkeit auf Behältnissen aufweisen, obwohl sie mit hoher Maßgenauigkeit gefertigt werden. Untersuchungen haben gezeigt, dass eine Größenvarianz der Deckel insbesondere dann auftritt, wenn die Deckel für unterschiedliche Zeitdauern unterschiedlichen Umweltbedingungen wie insbesondere feuchter Luft ausgesetzt sind.

Eine Beschichtung oder Imprägnierung der Deckel, um das Einwirken der Umwelteinflüsse zu verringern, ist mit einem verhältnismäßig hohen Aufwand in der Produktion verbunden und zudem muss eine essbare Beschichtung gewählt werden, um auch einen essbaren Deckel zu erhalten. Dies ist in der Praxis oft nicht möglich.

Aufgabe der Erfindung ist es daher, die Nachteile des Standes der Technik zu überwinden und insbesondere einen aus ökologischer Sicht verbesserten Deckel zu schaffen, der eine verbesserte Maßhaltigkeit aufweist.

Die erfindungsgemäße Aufgabe wird insbesondere durch die Merkmale der unabhängigen Patentansprüche gelöst.

Die Erfindung betrifft insbesondere eine Herstellungsanlage zur Bildung eines essbaren und bevorzugt genießbaren Deckels für ein Behältnis, wie insbesondere ein Trinkgefäß.

Bevorzugt ist vorgesehen, dass der Deckel einen Steckabschnitt zur Verbindung mit dem Behältnis aufweist.

Bevorzugt ist vorgesehen, dass der Steckabschnitt eine Soll-Abmessung aufweist, die an die Form und Größe eines bestimmten Behältnisses angepasst ist.

Bevorzugt ist vorgesehen, dass die Herstellungsanlage eine Backvorrichtung mit mehreren Backformen zur Herstellung von aus einem Teig gebackenen, formstabilen Deckelrohlingen umfasst.

Bevorzugt ist vorgesehen, dass die Backformen der Form des zu bildenden Deckels angepasst sind und jeweils einen Formabschnitt zur Bildung des Steckabschnitts des Deckelrohlings aufweisen.

Bevorzugt ist vorgesehen, dass der Formabschnitt derart dimensioniert ist, dass der Steckabschnitt des Deckelrohlings eine Roh-Abmessung aufweist, die kleiner ist als die Soll-Abmessung.

Bevorzugt ist vorgesehen, dass die Herstellungsanlage eine Konditioniervorrichtung umfasst, die die Abmessung des Steckabschnitts des Deckelrohlings durch Erhöhen der Feuchtigkeit des Deckelrohlings von der Roh-Abmessung auf die Soll-Abmessung vergrößert.

Gegebenenfalls ist vorgesehen, dass die Backformen entlang eines Endlosförderers angeordnet sind und in der Backvorrichtung kontinuierlich nacheinander:
- durch einen Teigauftragsbereich zum Einbringen des Teiges in die geöffneten Backformen,
- durch einen Schließbereich zum Schließen und Verriegeln der Backformen,
- durch einen beheizten Backraum zum Backen des in den Backformen angeordneten Teiges, wobei der Druck in der Backform während des Backens durch aus dem Teig austretende flüchtige Teigbestandteile gegebenenfalls erhöht ist,
- durch einen Öffenbereich zum Öffnen der Backformen,
- und durch einen Entnahmebereich zum Entnehmen der aus dem Teig zu formstabilen Körpern gebackenen Deckelrohlinge befördert werden.

Gegebenenfalls ist vorgesehen, dass die Konditioniervorrichtung einen Konditionierraum zur kontrollierten Zuführung von Feuchtigkeit in den Deckelrohling umfasst.

Gegebenenfalls ist vorgesehen, dass die Konditioniervorrichtung einen Konditionierförderer umfasst, der die Deckelrohlinge für eine bestimmte Konditionierzeit in bzw. durch den Konditionierraum befördert.

Gegebenenfalls ist vorgesehen,
dass die Konditioniervorrichtung die Feuchtigkeit der Deckelrohlinge auf mehr als 2%, insbesondere auf mehr als 3%, bevorzugt auf mehr als 3,5% erhöht, - und/oder dass die Konditioniervorrichtung die Feuchtigkeit der Deckelrohlinge auf 2% - 6%, insbesondere auf 3% bis 5%, bevorzugt auf 3,5% bis 4,5% erhöht.

Die Feuchtigkeit wird in allen Ausführungsformen bevorzugt nach der Trockenschrankmethode ermittelt. Bei dieser werden die zu prüfenden Deckel in einem Trockenschrank getrocknet. Dies geschieht beispielsweise bei über 100°C, vorzugsweise bei 105°C bis 150°C. Die Trocknung erfolgt bis zur Gewichtskonstanz des Deckelrohlings.

Beispielsweise wird ein Halogentrockner verwendet, der bei 130°C trocknet. Gegebenenfalls kann auch bei einer anderen Temperatur getrocknet werden. Dies dauert länger und der Unterschied ist nicht signifikant.

Aus dem Gewicht und insbesondere aus der Gewichtsdifferenz vor und nach dem Trockenen kann die Feuchtigkeit des Deckels bestimmt werden.

Gegebenenfalls ist vorgesehen, dass eine Schneidstation vorgesehen ist, die den Deckelrohling von Backresten befreit und/oder beschneidet, und insbesondere dass die Schneidstation entlang des Herstellungsprozesses zwischen der Backvorrichtung und der Konditioniervorrichtung angeordnet ist.

Gegebenenfalls umfasst die Herstellungsanlage eine Verpackungsstation zur Verpackung der Deckel nach der Konditioniervorrichtung.

Gegebenenfalls betrifft die Erfindung ein Verfahren zur Bildung eines essbaren und bevorzugt genießbaren Deckels für ein Behältnis, wie insbesondere ein Trinkgefäß, das folgende Schritte umfasst:
- Herstellen eines formstabilen Deckelrohlings durch Backen eines Teiges in einer Backform, wobei der Steckabschnitt des Deckelrohlings eine Roh-Abmessung aufweist, die kleiner ist als die Soll-Abmessung,
- Vergrößern der Abmessung des Steckabschnitts von der Roh-Abmessung auf die Soll-Abmessung durch Erhöhen der Feuchtigkeit des Deckelrohlings.

Gegebenenfalls ist vorgesehen, dass das Backen folgende Schritte umfasst:
- Einbringen eines Teiges in eine geöffnete Backform,
- Schließen und gegebenenfalls Verriegeln der Backform,
- Backen des in der Backform angeordneten Teiges während einer Backdauer, insbesondere durch Bewegen der Backform durch einen beheizten Backraum, wobei der Druck in der Backform während des Backens durch aus dem Teig austretende flüchtige Teigbestandteile gegebenenfalls erhöht wird,
- Öffnen der Backform,
- und Entnehmen des aus dem Teig zu einem formstabilen Körper gebackenen Deckelrohlings.

Gegebenenfalls ist vorgesehen, dass die Deckelrohlinge in der Konditioniervorrichtung von einem Konditionierförderer für eine bestimmte Konditionierzeit in bzw. durch einen Konditionierraum zur kontrollierten Zuführung von Feuchtigkeit in den Deckelrohling befördert werden.

Gegebenenfalls ist vorgesehen,
- dass die Feuchtigkeit der Deckelrohlinge in der Konditioniervorrichtung auf mehr als 2%, insbesondere auf mehr als 3%, bevorzugt auf mehr als 3,5% erhöht wird,
- und/oder dass die Feuchtigkeit der Deckelrohlinge in der Konditioniervorrichtung auf 2% - 6%, insbesondere auf 3% bis 5%, bevorzugt auf 3,5% bis 4,5% erhöht wird.

Gegebenenfalls ist vorgesehen, dass der Deckelrohling, insbesondere vor dem Erhöhen der Feuchtigkeit, von Backresten befreit und/oder beschnitten wird.

Gegebenenfalls ist vorgesehen, dass der Deckel nach dem Erhöhen der Feuchtigkeit in einer Verpackungsstation verpackt wird,
- insbesondere dass der Deckel nach dem Erhöhen der Feuchtigkeit in einer Verpackungsstation luftdicht verpackt wird

Gegebenenfalls ist vorgesehen, dass der Steckabschnitt eine umlaufende Dichtfläche bildet.

Gegebenenfalls ist vorgesehen, dass der Durchmesser der Dichtfläche von der Roh-Abmessung auf die Soll-Abmessung um 0,1% bis 5%, bevorzugt 0,5 bis 3%, besonders bevorzugt um 1% bis 2 % erhöht wird.

Gegebenenfalls betrifft die Erfindung einen Essbaren und bevorzugt genießbaren Deckel für ein Behältnis, wie insbesondere ein Trinkgefäß.

Bevorzugt ist vorgesehen, dass der Deckel einen Steckabschnitt zur Verbindung mit dem Behältnis aufweist.

Bevorzugt ist vorgesehen, dass der Steckabschnitt eine Soll-Abmessung aufweist, die an die Form und Größe eines bestimmten Behältnisses (2) angepasst ist.

Bevorzugt ist vorgesehen, dass der Deckel aus einem durch Backen eines Teiges in einer Backform gebildeten formstabilen Deckelrohling erhalten wird.

Bevorzugt ist vorgesehen, dass der Deckel einen, durch Erhöhen der Feuchtigkeit, von einer Roh-Abmessung auf eine Soll-Abmessung vergrößerten Steckabschnitt aufweist.

Gegebenenfalls ist vorgesehen, dass der Deckel eine Feuchtigkeit von mehr als 2%, insbesondere mehr als 3%, bevorzugt mehr als 3,5% aufweist.

Gegebenenfalls ist vorgesehen, dass der Deckel eine Feuchtigkeit von 2% - 6%, insbesondere von 3% bis 5%, bevorzugt von 3,5% bis 4,5% aufweist.

Gegebenenfalls ist vorgesehen, dass der Deckel unmittelbar nach Entnahme aus der Verpackung eine Feuchtigkeit von 2% - 6%, insbesondere von 3% bis 5%, bevorzugt von 3,5% bis 4,5% aufweist.

Bevorzugt ist in allen Ausführungsformen vorgesehen, dass der Deckel einen Steckabschnitt zur dichtenden Verbindung mit dem Behältnis aufweist, sodass der Berührungsbereich zwischen dem Deckel und dem Behältnis ausreichend flüssigkeitsdicht ausgestaltet ist.

Gegebenenfalls ist vorgesehen, dass der Teig ein Festteig ist,
- gegebenenfalls dass der Teig 17% bis 30%, insbesondere 27%, Wasser enthält,
- gegebenenfalls dass der Teig 43% bis 66%, insbesondere 51%, Mehl enthält,
- gegebenenfalls dass der Teig 2% bis 15%, insbesondere 10%, pflanzlichen Füllstoff enthält, wobei der pflanzliche Füllstoff insbesondere Weizenkleie ist oder beinhaltet,
- gegebenenfalls dass der Teig etwa 2% bis 11%, insbesondere 4%, pflanzliches Fett enthält,
- gegebenenfalls dass der Teig etwa 6% bis 11%, insbesondere 7,8%, Zucker oder Zucker-Äquivalent enthält,
- gegebenenfalls dass der Teig etwa 0,2% Salz enthält,
- gegebenenfalls dass der Teig einen Farbstoff- und/oder mindestens einen Geschmacksstoff enthält. Die Inhaltsstoffe werden so gewählt, dass sie 100% ergeben. Farbstoffe und/oder Geschmacksstoffe können einen Anteil einer oder mehrerer anderer Komponenten ersetzen, sodass 100% erreicht werden. Die Prozentangaben können in der Praxis vom Rezept um bis zu 10% abweichen.

Gegebenenfalls ist vorgesehen, dass der Teig portioniert auf den Mittenbereich der Backform aufgebracht wird, wobei der aufgebrachte Teig anfänglich nur einen Teil, insbesondere weniger als 50%, jener Fläche der Backform bedeckt, auf die er aufgebracht wird.

Alternativ kann auch ein ausgewalzter Teig in die Backform eingebracht werden.

Gegebenenfalls ist vorgesehen, dass sich der Teig durch Schließen der Backform und durch Ausdampfen der aus dem Teig austretenden flüchtigen Anteile unter Überdruck in der Backform verteilt.

Gegebenenfalls ist vorgesehen, dass der Teig unausgewalzt in die geöffnete Backform eingebracht wird.

Gegebenenfalls ist vorgesehen, dass der Teig ein flüssiger Waffelteig ist, der im unausgebackenen Zustand 35-70% Wasser enthält.

Gegebenenfalls ist vorgesehen, dass der Teig ein flüssiger Waffelteig ist,
- gegebenenfalls dass der Teig 45% bis 55%, insbesondere 49%, Wasser enthält,
- gegebenenfalls dass der Teig 45% bis 55%, insbesondere 49%, Mehl oder Stärke-Äquivalent oder eine Kombination daraus enthält,
- gegebenenfalls dass der Teig etwa 0,3% pflanzliches Fett enthält,
- gegebenenfalls dass der Teig etwa 0,3% Emulgator enthält,
- gegebenenfalls dass der Teig etwa 0,8% Zucker enthält,
- gegebenenfalls dass der Teig etwa 0,3% Salz enthält,
- gegebenenfalls dass der Teig etwa 0,3% Backtriebmittel enthält.

Die Inhaltsstoffe werden so gewählt, dass sie 100% ergeben. Die Prozentangaben können in der Praxis um bis zu 10% vom Rezept abweichen.

Gemäß einer ersten Ausführungsform kann der Teig zur Herstellung des Deckels ein Festteig sein und folgende Inhaltsstoffe enthalten:
- etwa 27% Wasser,
- etwa 10% pflanzlichen Füllstoff, wobei der pflanzliche Füllstoff insbesondere Roggenkleie ist oder beinhaltet,
- etwa 51% Mehl,
- etwa 4% pflanzliches Fett,
- etwa 7,8% Zucker,
- etwa 0,2% Salz,
- einen Farbstoff- und/oder mindestens einen Geschmacksstoff.

Alle Prozentangaben sind als Massenprozent im rohen Teig zu verstehen. Es können in der Praxis Abweichungen vom Rezept von beispielsweise bis zu 10% auftreten.

Der Teig wird bevorzugt ausgewalzt und nicht vorgebacken auf oder in die Backform eingebracht. Alternativ kann auch ein ausgewalzter Teig in die Backform eingebracht werden.

Gegebenenfalls ist der Deckel ein unbeschichteter gebackener Formkörper. Es ist vorteilhaft, wenn das Material des Deckels flüssigkeitsdicht oder zumindest für eine ausreichende Zeit flüssigkeitsbeständig ist.

Der gebackene Deckelrohling, insbesondere ein aus einem flüssigen Waffelteig hergestellter Deckelrohling, kann zur Verbesserung der Flüssigkeitsbeständigkeit beschichtet werden. Beispielsweise kann eine Beschichtung aus genießbarem Wachs, Biopolymer, Stärke-Lösung, gegebenenfalls als Mischung mit Proteinen, oder ähnlichen geeigneten Beschichtungsmaterialien vorgesehen sein.

Gegebenenfalls ist vorgesehen, dass der Teig in einem Formabschnitt der Backform zu einem Steckabschnitt zur form- oder kraftschlüssigen Verbindung des Deckels mit dem Behältnis gebacken wird.

Der Steckabschnitt kann beispielsweise einen Fortsatz zur kraftschlüssigen oder formschlüssigen Befestigung des Deckels an dem Behältnis aufweisen oder ein Fortsatz zur kraftschlüssigen oder formschlüssigen Befestigung des Deckels an dem Behältnis sein.

Gegebenenfalls ist vorgesehen, dass der Teig entfernt vom Formabschnitt in die Backform eingebracht wird.

Gegebenenfalls ist vorgesehen, dass der Teig durch Schließen der Backform und durch Ausdampfen der in dem Teig enthaltenen flüchtigen Anteile unter Überdruck in den Formabschnitt gedrückt wird und dort zu einem Steckabschnitt gebacken wird.

Gegebenenfalls ist vorgesehen, dass im Teigauftragsbereich eine Teigauftragsvorrichtung vorgesehen ist, die zum portionierten Auftragen eines Festteiges auf die Backform eingerichtet ist, wobei die Teigauftragsvorrichtung insbesondere eine auf die geöffnete Backform gerichtete Ausgabeöffnung zur Ausgabe eines unausgewalzten Festteiges aufweist.

Gegebenenfalls ist vorgesehen, dass im Teigauftragsbereich eine Teigauftragsvorrichtung vorgesehen ist, die zum Aufgießen eines flüssigen Waffelteigs auf die Backform eingerichtet ist, wobei die Teigauftragsvorrichtung insbesondere mindestens eine auf die geöffnete Backform gerichtete Ausgabeöffnung zur Ausgabe eines flüssigen Waffelteigs aufweist.

Gegebenenfalls ist vorgesehen, dass die Backformen jeweils öffenbare und schließbare Backzangen sind.

Gegebenenfalls ist vorgesehen, dass die Backformen Dampfleisten und/oder Dichtleisten umfassen, die derart ausgestaltet sind, dass der Druck in der Backform während des Backens durch aus dem Teig austretende flüchtige Teigbestandteile erhöht wird.

Gegebenenfalls verlaufen die Dampfleisten und/oder Dichtleisten entlang einer geschlossenen Kontur um die Backform und sind insbesondere ringförmig ausgebildet.

Gegebenenfalls ist vorgesehen, dass der Deckel zur Abdeckung und zur form- oder kraftschlüssigen Verbindung mit einem Behältnis eingerichtet ist.

Bevorzugt ist in dem Deckel eine Trinköffnung oder eine Ausgussöffnung vorgesehen. Gegebenenfalls umfasst der Deckel einen Fortsatz und eine mit dem Fortsatz verschlossene Trinköffnung, wobei der Fortsatz ein essbares gebackenes Teil des Deckels ist, und wobei der Fortsatz derart ausgestaltet ist, dass die Trinköffnung durch Abtrennen, insbesondere durch Abbeißen und gegebenenfalls Verzehren, zumindest eines Teils des Fortsatzes geöffnet werden kann.

Gegebenenfalls ist zusätzlich zur Trinköffnung oder Ausgussöffnung eine Belüftungsöffnung vorgesehen. Diese wird beispielsweise durch eine Bohrung erstellt.

Gegebenenfalls beträgt die Gesamthöhe des Deckels maximal 20mm oder 15mm oder 10mm.

In vorteilhafter Weise wird der Deckelrohling auf einer Herstellungsanlage zur Bildung von Backprodukten hergestellt, die zwar grundsätzlich bekannt ist, aber zur Herstellung der erfindungsgemäßen Deckel gegebenenfalls angepasst wird. Insbesondere umfasst die Herstellungsanlage eine Konditioniervorrichtung und, wenn erforderlich, werden die Backformen speziell ausgestaltet.

Die Backformen umfassen bevorzugt je eine Oberplatte und eine Unterplatte, in denen die jeweiligen Formhälftennegative eingearbeitet sind. Bei geschlossener Backform schließen die Platten am Produktrand bevorzugt bündig. Dazu können am Produktrand Dampfkanäle rundum vorgesehen sein, deren Anzahl, Anordnung, Tiefe und Geometrie entsprechend eines ungestörten Ausdampfverhaltens zu definieren sind. Alternativ oder zusätzlich kann auch in geschlossener Stellung ein definierter Abstand zwischen Ober- und Unterplatte vorgesehen sein, wobei der Abstand beispielsweise, je nach Anforderung, zwischen 0,1 und 1,0 mm betragen kann.

Die Wandstärke des Deckels beträgt bevorzugt mehr als 1mm, insbesondere 2mm oder mehr. Die maximale Wandstärke beträgt beispielsweise 6mm. Bevorzugt ist die Wandstärke des Deckels über dessen Verlauf konstant.

Bevorzugt ist die beschriebene oder erfindungsgemäße Herstellungsanlage zur Ausführung des beschriebenen oder erfindungsgemäßen Verfahrens eingerichtet. Bevorzugt wird das beschriebene oder erfindungsgemäße Verfahren auf der beschriebenen oder erfindungsgemäßen Herstellungsanlage ausgeführt. Der beschriebene oder erfindungsgemäße Deckel wird bevorzugt auf der beschriebenen oder erfindungsgemäßen Herstellungsanlage und/oder durch das beschriebene oder erfindungsgemäße Verfahren hergestellt.

In weiterer Folge wird die Erfindung anhand der Figuren weiter beschrieben.
**Fig. 1** zeigt eine schematische Seitenansicht bzw. Schnittdarstellung einer Herstellungsanlage, die aus Darstellungsgründen geteilt dargestellt ist.
**Fig. 2** zeigt eine schematische Schnittdarstellung einer Backform mit einem Deckelrohling.
**Fig. 3** zeigt einen Deckel auf einem Behältnis.

Wenn nicht anders angegeben, so entsprechen die Bezugszeichen der Figuren folgenden Komponenten: Deckel 1, Behältnis 2, Steckabschnitt 3, Soll-Abmessung 4, Backform 5, Deckelrohling 6, Formabschnitt 7, Roh-Abmessung 8, Konditioniervorrichtung 9, Backvorrichtung 10, Endlosförderer (der Backvorrichtung) 11, Teigauftragsbereich 12, Schließbereich 13, Backraum 14, Öffenbereich 15, Entnahmebereich 16, Konditionierraum 17, Schneidstation 18, Verpackungsstation 19, Konditionierförderer 20, Deckelplatte 21, Trinköffnung 22, Kragen 23.

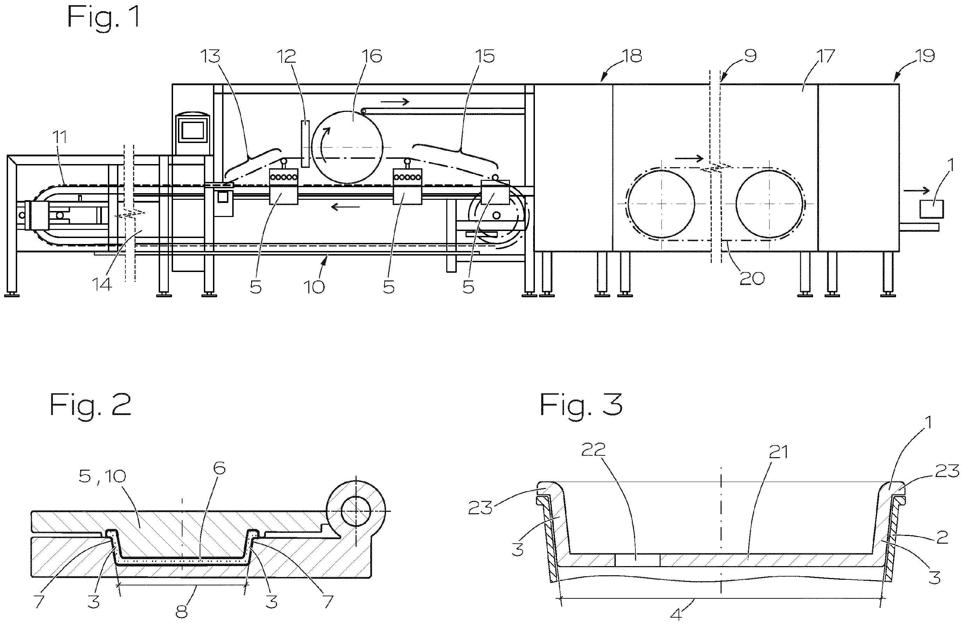

**Fig. 1** zeigt eine schematische Darstellung von Komponenten einer Herstellungsanlage zur Bildung eines essbaren Deckels 1.

Die Herstellungsanlage umfasst eine Backvorrichtung 10 und eine Konditioniervorrichtung 9. In der vorliegenden Ausführungsform sind neben diesen beiden Komponenten auch noch eine Schneidstation 18 sowie eine Verpackungsstation 19 vorgesehen.

Die Backvorrichtung 10 umfasst einen Endlosförderer 11, der mehrere Backformen 5 durch die Backvorrichtung 10 befördert. Die Backformen 5 sind bevorzugt entlang des Endlosförderers 11 aneinander gereiht. Dadurch werden die Backformen 5 jeweils in einen Teigauftragsbereich 12 zum Auftragen des Teigs in die geöffnete Backform 5, weiter in einen Schließbereich 13 zum Schließen und bevorzugt Verriegeln der Backformen 5, weiter in einen beheizten Backraum 14 befördert, wo der Teig zu formstabilen Deckelrohlingen 6 gebacken wird. Nach dem Backraum 14 ist ein Öffenbereich 15 vorgesehen, in dem die Backformen 5 geöffnet werden, um die Deckelrohlinge 6 in einem Entnahmebereich 16 entnehmen zu können. Die Entnahme erfolgt beispielsweise über eine Saugtrommel oder einen Greifer.

Die Deckelrohlinge 6 werden in weiterer Folge einer Konditioniervorrichtung 9 zugeführt.

Bevorzugt geschieht die Herstellung der Deckelrohlinge 6 in einem kontinuierlichen Prozess, in dem sich der Endlosförderer 11 kontinuierlich durch die genannten Bereiche bewegt.

In der vorliegenden Ausführungsform ist zwischen der Konditioniervorrichtung 9 und der Backvorrichtung 10 eine Schneidstation 18 vorgesehen, in der die Deckelrohlinge 6 von überschüssigem Teig, beispielsweise vom Backzusammenhang, befreit werden oder entgratet werden. Gegebenenfalls kann die Schneidstation 18 jedoch auch nach der Konditioniervorrichtung 9 vorgesehen sein oder gänzlich entfallen.

Die Konditioniervorrichtung 9 umfasst einen Konditionierraum 17 und einen Konditionierförderer 20. Durch den Konditionierförderer 20 werden die Deckelrohlinge 6 durch oder in den Konditionierraum 17 befördert. Im Konditionierraum 17 wird bevorzugt ein Milieu geschaffen, in dem die Feuchtigkeit der Deckelrohlinge 6 erhöht wird. Insbesondere sind in dem Konditionierraum 17 die Lufttemperatur und/oder die Luftfeuchtigkeit aktiv gesteuert und/oder geregelt.

Nach dem Backen der Deckelrohlinge 6 in der Backvorrichtung 10 weisen die Deckelrohlinge 6 eine gewisse Restfeuchte auf, die meist im Bereich von 1,2 bis 1,8% liegt. Die Feuchte der Deckelrohlinge 6 wird bevorzugt nach der Trockenschrankmethode bestimmt.

In der Konditioniervorrichtung 9 wird die Feuchtigkeit der Deckelrohlinge 6 derart angepasst, dass diese ihre Größe ändern und insbesondere vergrößert werden. In weiterer Folge können die in der Konditioniervorrichtung 9 bearbeiteten Deckelrohlinge 6 bzw. die daraus gebildeten Deckel 1 in einer Verpackungsstation 19 verpackt werden. Bevorzugt werden die Deckel 1 in der Verpackungsstation 19 luftdicht verpackt und beispielsweise in einer Kunststofffolie verschweißt.

Wird die Verpackung beim Endkunden bzw. zum Verschließen eines Behältnisses 2 geöffnet, so weisen die Deckel 1 im Wesentlichen jene Feuchtigkeit auf, die sie bei dem Verlassen der Verpackungsstation 19 und insbesondere auch beim Verlassen der Konditioniervorrichtung 9 aufweisen.

Die Abmessung des Steckabschnitts 3 des Deckelrohlings 6 wird in der Konditioniervorrichtung 9 beispielsweise um 0,1% bis 5%, bevorzugt 0,5 bis 3%, besonders bevorzugt um 1% bis 2 % vergrößert.

Als Roh-Abmessung 8 und Soll-Abmessung 4 werden bevorzugt Größenbereiche verstanden, die durch die Fertigungstoleranzen bestimmt sind.

## Patentansprüche

1. **Herstellungsanlage** zur Bildung eines essbaren und bevorzugt genießbaren Deckels (1) für ein Behältnis (2), wie insbesondere ein Trinkgefäß,
- wobei der Deckel (1) einen Steckabschnitt (3) zur Verbindung mit dem Behältnis (2) aufweist,
- wobei der Steckabschnitt (3) eine Soll-Abmessung (4) aufweist, die an die Form und Größe eines bestimmten Behältnisses (2) angepasst ist,
- wobei die Herstellungsanlage eine Backvorrichtung (10) mit mehreren Backformen (5) zur Herstellung von aus einem Teig gebackenen, formstabilen Deckelrohlingen (6) umfasst,
- wobei die Backformen (5) der Form des zu bildenden Deckels (1) angepasst sind und jeweils einen Formabschnitt (7) zur Bildung des Steckabschnitts (3) des Deckelrohlings (6) aufweisen,
**dadurch gekennzeichnet,**
- **dass** der Formabschnitt (7) derart dimensioniert ist, dass der Steckabschnitt (3) des Deckelrohlings (6) eine Roh-Abmessung (8) aufweist, die kleiner ist als die Soll-Abmessung (4),
- **und dass** die Herstellungsanlage eine Konditioniervorrichtung (9) umfasst, die die Abmessung des Steckabschnitts (3) des Deckelrohlings (6) durch Erhöhen der Feuchtigkeit des Deckelrohlings (6) von der Roh-Abmessung (8) auf die Soll-Abmessung (4) vergrößert.

2. Herstellungsanlage nach Anspruch 1, **dadurch gekennzeichnet, dass** die Backformen (5) entlang eines Endlosförderers (11) angeordnet sind und in der Backvorrichtung (10) kontinuierlich nacheinander:
- durch einen Teigauftragsbereich (12) zum Einbringen des Teiges in die geöffneten Backformen (5),
- durch einen Schließbereich (13) zum Schließen und gegebenenfalls Verriegeln der Backformen (5),
- durch einen beheizten Backraum (14) zum Backen des in den Backformen (5) angeordneten Teiges, wobei der Druck in der Backform (5) während des Backens durch aus dem Teig austretende flüchtige Teigbestandteile gegebenenfalls erhöht ist,
- durch einen Öffenbereich (15) zum Öffnen der Backformen (5),
- und durch einen Entnahmebereich (16) zum Entnehmen der aus dem Teig zu formstabilen Körpern gebackenen Deckelrohlinge (6) befördert werden.

3. Herstellungsanlage nach Anspruch 1 oder 2, **dadurch gekennzeichnet,**
- **dass** die Konditioniervorrichtung (9) einen Konditionierraum (17) zur kontrollierten Zuführung von Feuchtigkeit in den Deckelrohling (6) umfasst,
- und **dass** die Konditioniervorrichtung (9) einen Konditionierförderer (20) umfasst, der die Deckelrohlinge (6) für eine bestimmte Konditionierzeit in bzw. durch den Konditionierraum (17) befördert.

4. Herstellungsanlage nach einem der Ansprüche 1 bis 3, **dadurch gekennzeichnet,**
- **dass** die Konditioniervorrichtung (9) die Feuchtigkeit der Deckelrohlinge (6) auf mehr als 2%, insbesondere auf mehr als 3%, bevorzugt auf mehr als 3,5% erhöht,
- und/oder dass die Konditioniervorrichtung (9) die Feuchtigkeit der Deckelrohlinge (6) auf 2% - 6%, insbesondere auf 3% bis 5%, bevorzugt auf 3,5% bis 4,5% erhöht.

5. Herstellungsanlage nach einem der Ansprüche 1 bis 4, **dadurch gekennzeichnet,**
- **dass** eine Schneidstation (18) vorgesehen ist, die den Deckelrohling (6) von Backresten befreit und/oder beschneidet,
- insbesondere dass die Schneidstation (18) entlang des Herstellungsprozesses zwischen der Backvorrichtung (10) und der Konditioniervorrichtung (9) angeordnet ist.

6. Herstellungsanlage nach einem der Ansprüche 1 bis 5, umfassend eine Verpackungsstation (19) zur Verpackung der Deckel (1) nach der Konditioniervorrichtung (9).

7. **Verfahren** zur Bildung eines essbaren und bevorzugt genießbaren Deckels (1) für ein Behältnis (2), wie insbesondere ein Trinkgefäß,
- wobei der Deckel (1) einen Steckabschnitt (3) zur Verbindung mit dem Behältnis (2) aufweist,
- und wobei der Steckabschnitt (3) eine Soll-Abmessung (4) aufweist, die an die Form und Größe eines bestimmten Behältnisses (2) angepasst ist,
umfassend folgende Schritte:
- Herstellen eines formstabilen Deckelrohlings (6) durch Backen eines Teiges in einer Backform (5), wobei der Steckabschnitt (3) des Deckelrohlings (6) eine Roh-Abmessung (8) aufweist, die kleiner ist als die Soll-Abmessung (4),
- Vergrößern der Abmessung des Steckabschnitts (3) von der Roh-Abmessung (8) auf die Soll-Abmessung (4) durch Erhöhen der Feuchtigkeit des Deckelrohlings (6).

8. Verfahren nach Anspruch 7, wobei das Backen folgende Schritte umfasst:
- Einbringen eines Teiges in eine geöffnete Backform (5),
- Schließen und gegebenenfalls Verriegeln der Backform (5),
- Backen des in der Backform (5) angeordneten Teiges während einer Backdauer, insbesondere durch Bewegen der Backform (5) durch einen beheizten Backraum (14), wobei der Druck in der Backform (5) während des Backens durch aus dem Teig austretende flüchtige Teigbestandteile gegebenenfalls erhöht wird,
- Öffnen der Backform (5),
- und Entnehmen des aus dem Teig zu einem formstabilen Körper gebackenen Deckelrohlings (6).

9. Verfahren nach Anspruch 7 oder 8, **dadurch gekennzeichnet, dass** die Deckelrohlinge (6) in der Konditioniervorrichtung (9) von einem Konditionierförderer (20) für eine bestimmte Konditionierzeit in bzw. durch einen Konditionierraum (17) zur kontrollierten Zuführung von Feuchtigkeit in den Deckelrohling (6) befördert werden.

10. Verfahren nach einem der Ansprüche 7 bis 9, **dadurch gekennzeichnet,**
- **dass** die Feuchtigkeit der Deckelrohlinge (6) in der Konditioniervorrichtung (9) auf mehr als 2%, insbesondere auf mehr als 3%, bevorzugt auf mehr als 3,5% erhöht wird,
- und/oder dass die Feuchtigkeit der Deckelrohlinge (6) in der Konditioniervorrichtung (9) auf 2% - 6%, insbesondere auf 3% bis 5%, bevorzugt auf 3,5% bis 4,5% erhöht wird.

11. Verfahren nach einem der Ansprüche 7 bis 10, **dadurch gekennzeichnet, dass** der Deckelrohling (6), insbesondere vor dem Erhöhen der Feuchtigkeit, von Backresten befreit und/oder beschnitten wird.

12. Verfahren nach einem der Ansprüche 7 bis 10, **dadurch gekennzeichnet,**
- **dass** der Deckel (1) nach dem Erhöhen der Feuchtigkeit in einer Verpackungsstation (19) verpackt wird,
- insbesondere dass der Deckel (1) nach dem Erhöhen der Feuchtigkeit in einer Verpackungsstation (19) luftdicht verpackt wird

13. Verfahren nach einem der Ansprüche 7 bis 13, **dadurch gekennzeichnet,**
- **dass** der Steckabschnitt (3) eine umlaufende Dichtfläche bildet,
- und **dass** der Durchmesser der Dichtfläche von der Roh-Abmessung (8) auf die Soll-Abmessung (4) um 0,1% bis 5%, bevorzugt 0,5 bis 3%, besonders bevorzugt um 1% bis 2 % erhöht wird.

14. Essbarer und bevorzugt genießbarer **Deckel (1)** für ein Behältnis (2), wie insbesondere ein Trinkgefäß,
- wobei der Deckel (1) einen Steckabschnitt (3) zur Verbindung mit dem Behältnis (2) aufweist,
- wobei der Steckabschnitt (3) eine Soll-Abmessung (4) aufweist, die an die Form und Größe eines bestimmten Behältnisses (2) angepasst ist,
- wobei der Deckel (1) aus einem durch Backen eines Teiges in einer Backform (5) gebildeten formstabilen Deckelrohling (6) erhalten wird,
**dadurch gekennzeichnet,**
- **dass** der Deckel (1) einen, durch Erhöhen der Feuchtigkeit, von einer Roh-Abmessung (8) auf eine Soll-Abmessung (4) vergrößerten Steckabschnitt (3) aufweist.

15. Deckel (1) nach Anspruch 14, **dadurch gekennzeichnet,**
- **dass** der Deckel eine Feuchtigkeit von mehr als 2%, insbesondere von mehr als 3%, bevorzugt von mehr als 3,5% aufweist.
- und/oder dass der Deckel eine Feuchtigkeit von 2% - 6%, insbesondere von 3% bis 5%, bevorzugt von 3,5% bis 4,5% aufweist,
- wobei der Deckel diese Feuchtigkeit bevorzugt unmittelbar nach der Entnahme aus der Verpackung aufweist.
